# EUROPEAN PATENT SPECIFICATION

(11) **EP 3 152 425 B1**
(45) Date of publication and mention of the grant of the patent: **08.05.2019**
(21) Application number: 15803827.3
(22) Date of filing: 27.05.2015
(51) Int. Cl.: F01P 5/10, F01P 5/14, F16K 11/052

(54) **COOLING ARRANGEMENT AND A MOTOR VEHICLE EQUIPPED WITH SUCH A COOLING SYSTEM**
KÜHLANORDNUNG UND KRAFTFAHRZEUG MIT EINEM DERARTIGEN KÜHLSYSTEM
AGENCEMENT DE REFROIDISSEMENT ET VÉHICULE À MOTEUR COMPORTANT UN TEL SYSTÈME DE REFROIDISSEMENT

(30) Priority: 03.06.2014 SE 1450667
(43) Date of publication of application: 12.04.2017
(73) Proprietor: Scania CV AB, 151 87 Södertälje (SE)
(72) Inventor: EKMAN, Mats, S-155 32 Nykvarn (SE)
(74) Representative: Scania CV AB
(86) International application number: PCT/SE2015/050609
(87) International publication number: WO 2015/187079

(56) References cited:
- CN-U- 202 117 755
- DE-A1- 10 249 448
- DE-A1-102006 036 186
- DE-A1-102008 059 613
- FR-A1- 2 519 694
- JP-A- H 112 344
- JP-A- H09 158 724
- JP-A- 2011 256 736
- US-A1- 2009 188 450
- US-B1- 6 644 352

## Description

### TECHNICAL FIELD OF THE INVENTION AND PRIOR ART

The present invention concerns a cooling system according to the preamble to claim 1 for cooling a combustion engine of a motor vehicle. The invention also concerns a motor vehicle equipped with such a cooling system.

A combustion engine of a motor vehicle is normally cooled with the help of liquid coolant that is circulated in a cooling loop connected to the combustion engine, wherein a liquid coolant pump driven by the combustion engine is coupled into the cooling loop to circulate the liquid coolant. This mechanically driven liquid coolant pump comprises a pump rotor which is connected via a mechanical force transfer arrangement to a rotating shaft of the combustion engine so as to be driven thereby. The pump rotor will thus rotate at an rpm that is dependent upon the rpm of the combustion engine, and the liquid coolant flow generated in the cooling loop by the liquid coolant pump is thus dependent upon the rpm of the combustion engine. A thermostat is normally used to regulate the temperature of the circulating liquid coolant. The thermostat controls, in dependence upon the temperature of the liquid coolant, the liquid coolant flowing from the combustion engine to a liquid coolant radiator to be cooled therein before the liquid coolant is returned to the combustion engine, or directly back to the combustion engine without passing through the liquid coolant radiator. The liquid coolant that flows through the liquid coolant radiator is cooled by means of air that is blown by the headwind against the liquid coolant radiator when the motor vehicle is in motion. A fan can be activated in connection with increased cooling power, e.g. in connection with heavy engine load and high ambient temperature, in order to generate an additionally robust airflow through the liquid coolant radiator.

During a cold start it is desirable to achieve rapid warming up of the combustion engine in order to be able to meet applicable requirements in terms of exhaust purification, and to minimize fuel consumption. To achieve warming up of the combustion engine as rapidly as possible during a cold start, it can be desirable to reduce the liquid coolant flow through the combustion engine so that the liquid coolant flow is lower than the liquid coolant flow that is generated by the combustion engine-driven liquid coolant pump. In addition, the combustion engine-driven liquid coolant pump can generate a liquid coolant flow that is unnecessarily high in relation to the cooling power required in a warmed-up combustion engine under low engine load. During a cold start and under low engine load, it can thus be advantageous to maintain a liquid coolant flow that is lower than the liquid coolant flow that is generated by the combustion engine-driven liquid coolant pump.

A cooling system according to the preamble to claim 1 is previously known from US 8 196 553 B2. This known cooling system comprises two different liquid coolant pumps for circulating liquid coolant in a cooling loop that is connected to a combustion engine. One of these liquid coolant pumps is a combustion engine-driven liquid coolant pump that can be disconnected from the combustion engine by means of a connecting device, while the other liquid coolant pump is an electrically powered liquid coolant pump. During a cold start and under low engine load with low cooling demand, the former liquid coolant pump can be disconnected from the combustion engine at the same time as the electrically powered liquid coolant pump is driven at an rpm suitable for generating a desired low liquid coolant flow. A similar cooling system is shown in FR 2 519 694.

### OBJECT OF THE INVENTION

The object of the present invention is to provide a cooling system of the type described above with a new and advantageous design.

### SUMMARY OF THE INVENTION

Said object is achieved according to the present invention by means of a cooling system exhibiting the features defined in claim 1.

The cooling system according to the invention comprises:
- a cooling loop for cooling a combustion engine of a motor vehicle by means of liquid coolant flowing in the cooling loop,
- a first liquid coolant pump for circulating the liquid coolant in the cooling loop, wherein said first liquid coolant pump is arranged in a first line of the cooling loop, and arranged so as to be driven by the combustion engine,
- a connecting device, by means of which the first liquid coolant pump is disconnectable from the combustion engine, and
- a second liquid coolant pump for circulating the liquid coolant in the cooling loop, wherein said second liquid coolant pump is electrically powered and arranged in a second line of the cooling loop.

Said second line exhibits an inlet that is connected to the first line at a first point in the first line, and an outlet that is connected to the first line at a second point in the first line downstream of said first point. A non-return valve is arranged at said second point, wherein said non-return valve comprises a pivotably mounted valve flap that is pivotable between a first end position, in which the valve flap is pivoted away from the first line and covers the outlet of the second line so as to thereby prevent a backflow of liquid coolant in the second line, and a second end position, in which the valve flap is pivoted away from the outlet of the second line and extends across the first line so as to thereby prevent a backflow of liquid coolant in the section of the first line extending between said first point and said second point. The valve flap is arranged so as to assume said first end position when liquid coolant is, under the action of the first liquid coolant pump, flowing through said section of the first line at the same time as the second liquid coolant pump is turned off, and to assume said second end position when liquid coolant is, under the action of the second liquid coolant pump, flowing through the second line at the same time as the first liquid coolant pump is turned off.

With the solution according to the invention, one and the same valve flap can be used in a first operating situation to prevent backflow through the second line and, in a second operating situation, to prevent backflow through a section of the first line, without any active control of the valve flap by means of a control device needing to be applied. The valve flap also enables favorable flow conditions for the passage of the liquid coolant past the area where the outlet of the second line connects to the first line, both in an operating situation in which only the first liquid coolant pump is in operation and in an operating situation in which the second liquid coolant pump is in operation.

According to one embodiment of the invention, the first liquid coolant pump is arranged in the section of the first line that extends between said first point and said second point, and in this case the two liquid coolant pumps are thus connected in parallel with one another, and the valve flap will prevent the flow of liquid coolant through the first liquid coolant pump when liquid coolant is, under the action of the electrically powered second liquid coolant pump, flowing through the second line at the same time as the first liquid coolant pump is disconnected from the combustion engine. As a result, the first liquid coolant pump will not cause any pressure drop in the circulating liquid coolant when said liquid coolant pump is taken out of operation, which leads in turn to a reduction of the pump power output required from the second liquid coolant pump to achieve a desired liquid coolant flow, and thus a reduction of the energy consumed to drive the second liquid coolant pump.

Other advantageous features of the cooling system according to the invention are presented in the non-independent claims, and in the description below.

The invention also concerns a motor vehicle exhibiting the features defined in claim 8.

### BRIEF DESCRIPTION OF THE DRAWINGS

The invention will be described in greater detail below with the help of embodiments, and with reference to the accompanying drawings, which show:
- Fig. 1: a block diagram of a cooling system according to a first embodiment of the present invention,
- Fig. 2a: a schematic illustration of a part of the cooling system according to Fig. 1, with a valve flap in a non-return involved comprised in the cooling system shown in a first end position,
- Fig. 2b: a schematic illustration corresponding to Fig. 2a, but with the valve flap shown in a second end position,
- Fig. 3: a schematic illustration of said non-return valve in larger scale,
- Fig. 4: a block diagram of a cooling system according to a second embodiment of the invention, and
- Fig. 5: a block diagram of a cooling system according to a third embodiment of the invention.

### DETAILED DESCRIPTION OF EMBODIMENTS OF THE INVENTION

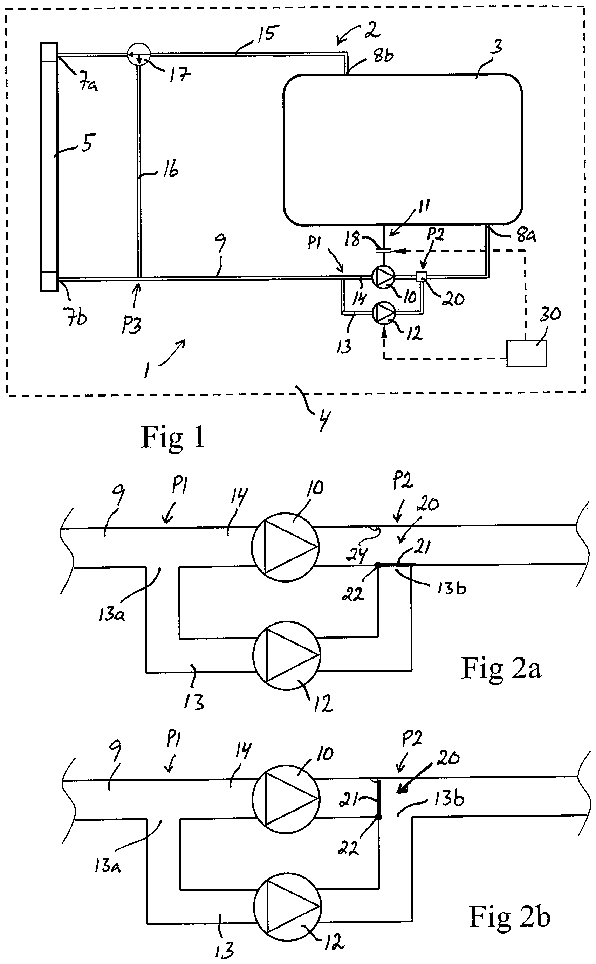

Fig. 1 illustrates a cooling system 1 according to one embodiment of the present invention. The cooling system 1 comprises a cooling loop 2 for cooling a combustion engine 3 of a motor vehicle 4 by means of a liquid coolant flowing through the cooling loop, preferably in the form of water with optional freezing point-lowering additives such as, for example, glycol. A liquid coolant radiator 5 is coupled into the cooling loop 2 to cool said liquid coolant.

The cooling system 1 comprises a first liquid coolant pump 10 for circulating the liquid coolant in the cooling loop 2, wherein said first liquid coolant pump 10 is arranged in a first line 9 of the cooling loop 2 and arranged so as to be driven by the combustion engine 3 via a mechanical force-transfer arrangement 11. The first liquid coolant pump 10 is equipped with a pump rotor that is connected to a rotating shaft of the combustion engine 3 via said force-transfer arrangement 11 so as to enable the pump rotor to be rotated under the action of said rotating shaft of the combustion engine.

The cooling system 1 also comprises a second liquid coolant pump 12 for circulating the liquid coolant in the cooling loop 2, wherein said second liquid coolant pump 12 is electrically powered and arranged in a second line 13 of the cooling loop. The second liquid coolant pump 12 is equipped with a pump rotor that is connected to an outgoing shaft of an electric motor to enable the pump rotor to be rotated under the action of said electric motor. The second line 13 exhibits an outlet 13a that is connected to the first line 9 at a first point P1 of the first line and an outlet 13b that is connected to the first line 9 at the second point P2 of the first line downstream of said first point P1. The liquid coolant circulating in the cooling loop 2 can be conducted so as to bypass the second liquid coolant pump 12 via the section 14 of the first line 9 that extends between points P1 and P2.

A liquid coolant outlet 7b of the liquid coolant radiator 5 is connected to a liquid coolant inlet 8a of the combustion engine 3 via said first line 9, and a liquid coolant outlet 8b of the combustion engine 3 is connected to a liquid coolant inlet 7a of the liquid coolant radiator 5 via a third line 15 of the cooling loop 2. Said third line 15 is connected to said first line 9 via a fourth line 16 of the cooling loop. Said fourth line 16 is connected to the first line 9 at a third point P3 in the first line upstream of said first and second points P1, P2 and arranged so as to enable liquid coolant to be returned from the liquid coolant outlet 8b of the combustion engine to the liquid coolant inlet 8a of the combustion engine without the liquid coolant passing through the liquid coolant radiator 5. The fourth line 16 thus constitutes a bypass line, through which the liquid coolant circulating in the cooling loop 2 can be conducted so as to bypass the liquid coolant radiator 5 during its passage between the liquid coolant outlet 8b and the liquid coolant inlet 8a of the combustion engine 3. The liquid coolant is circulated between the liquid coolant inlet 8a and the liquid coolant outlet 8b of the combustion engine 3 through liquid coolant ducts inside the combustion engine while absorbing heat from the combustion engine.

A thermostat 17 is coupled into the third line 15. Said thermostat 17 is arranged so as to regulate the flow of liquid coolant to the liquid coolant radiator 5 and to said fourth line 16 in dependence upon the temperature of the liquid coolant.

The liquid coolant that flows through the liquid coolant radiator 5 is cooled by means of air that is blown by the headwind against the liquid coolant radiator when the motor vehicle is in motion. The cooling system 1 can also comprise a fan (not shown) that is arranged so as to generate airflow through the liquid coolant radiator 5 as needed. Said fan can be arranged so as to be driven by an electric motor or connected to the combustion engine 3 so as to driven thereby.

The first liquid coolant pump 10 is disconnectable from the combustion engine 3 by means of an electrically controlled connecting device 18.

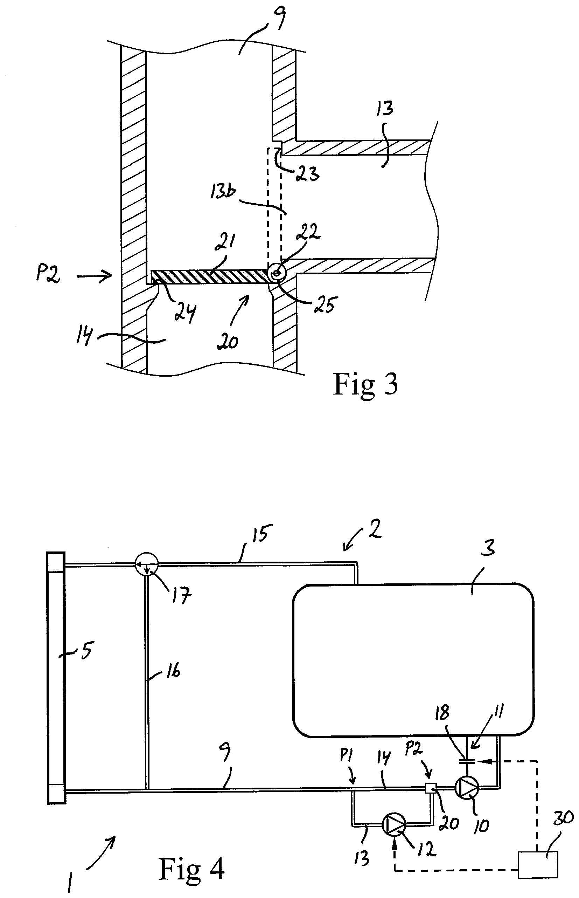

A non-return valve 20 is arranged at aforesaid second point P2. Said non-return valve 20 comprises a pivotably mounted valve flap 21 that is pivotable around a pivot axis 22 between a first end position (see Fig. 2a), in which the valve flap 21 is pivoted away from the first line 9 and covers the outlet 13b of the second line 13 so as to thereby prevent a backflow of liquid coolant in the second line 13, and a second end position (see Fig. 2b), in which the valve flap 21 is pivoted away from the outlet 13b of the second line 13 and extends across the first line 9 so as to thereby prevent a backflow of liquid coolant in the section 14 of the first line 9 that extends between said first point P1 and said second point P2. In Fig. 3 the valve flap 21 is depicted using solid lines in the second end position t, and using broken lines in the first end position t. The valve flap 21 is arranged so as to assume said first end position when liquid coolant is, under the action of the first liquid coolant pump 10, flowing through said section 14 of the first line 9 at the same time as the second liquid coolant pump 12 is turned off, and so as to assume second end position when liquid coolant is, under the action of the second liquid coolant pump 12, flowing through the second line 13 at the same time as the first liquid coolant pump 10 is disconnected from the combustion engine 3 and is thus turned off. In a situation in which both the liquid coolant pumps 10, 12 are in operation, the valve flap 21 will assume a position somewhere between the two end positions.

In said first end position the valve flap 21 abuts against a first shoulder 23 arranged at the outlet 13b of the second line 13 (see Fig. 3), and in said second end position the valve flap 21 abuts against a second shoulder 24 arranged in the first line 9.

The valve flap 21 is advantageously arranged so as to assume, under the action of the force of gravity and/or the spring force of a spring element 25 acting on the valve flap 21 (see Fig. 3), said second end position when both the liquid coolant pumps 10, 12 are turned off and no liquid coolant is flowing through the first and second lines 9, 13, whereupon the valve flap 21 is in such case pivotable from said second end position in the direction toward said first end position under the action of a liquid coolant flow generated by the first liquid coolant pump 10 through said section 14 of the first line 9.

As an alternative, the valve flap 21 could be arranged so as to assume, under the action of the force of gravity and/or the spring force of a spring element 25 acting on the valve flap 21, said first end position when both the liquid coolant pumps 10, 12 are turned off and no liquid coolant is flowing through the first and second lines 9, 13, whereupon the valve flap 21 is in such case pivotable from said first end position in the direction toward said second end position under the action of a liquid coolant flow generated by the second liquid coolant pump 12 through the second line 13.

The connecting device 18 and the second liquid coolant pump 12 are controlled by means of an electronic control device 30 in dependence upon a predetermined control algorithm, which can, among other things, be arranged so as to take into account the engine load of the combustion engine 3 and the temperature of the liquid coolant. During a cold start of the combustion engine 3 and under low engine load with low cooling demand of the combustion engine 3, the electronic control device 30 is arranged so as to place the connecting device 18 in disengagement position, so that the first liquid coolant pump 10 is disengaged from the combustion engine 3 and thereby inactivated, and so as to simultaneously cause the second liquid coolant pump 12 to be driven at an rpm suitable for generating a desired low flow of liquid coolant in the cooling loop 2. The valve flap 21 will thus automatically assume the aforesaid second end position t, thereby preventing backflow into said section 14 of the first line 9. When the cooling demand of the combustion engine 3 is then increased to a predetermined level, the electronic control device 30 is arranged so as to bring the connecting device 18 into engagement position, so that the first liquid coolant pump 10 is connected to the combustion engine 3 and thereby activated, and so as to simultaneously inactivate the second liquid coolant pump 12. The valve flap 21 will then automatically pivot from the second end position t to the first end position t, thereby preventing backflow into the second line 13.

The electronic connecting device 30 can be realized by means of a single electronic control unit in the motor vehicle, as is illustrated in Figs. 1, 4 and 5. However, the electronic control device 30 could alternatively be realized by means of two or more mutually interacting electronic control units in the motor vehicle.

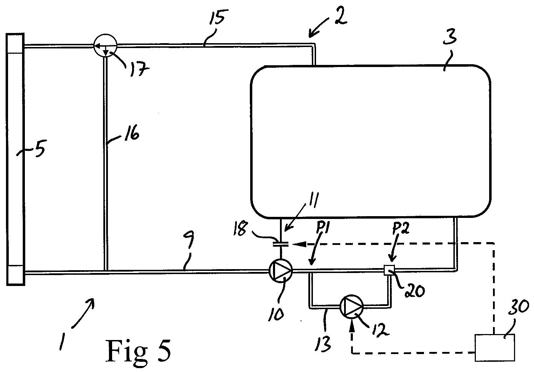

In the embodiment illustrated in Fig. 1, the first liquid coolant pump 10 is arranged in the section 14 of the first line 9 that extends between said first and second points P1, P2. In this case the first liquid coolant pump 10 and the second liquid coolant pump 12 are connected in parallel with one another. However, the first liquid coolant pump 10 could alternatively be arranged in the first line 9 downstream of said second point P2, as is illustrated in Fig. 4. As an alternative, the first liquid coolant pump 10 could be arranged in the first line 9 upstream of said first point P1, as is illustrated in Fig. 5.

As noted above, the electrically powered second liquid coolant pump 12 can be used to maintain a low flow of liquid coolant in the cooling loop 2 during a cold start or in connection with low engine load. The second liquid coolant pump 12 could also be used to:
- maintain a flow of liquid coolant in the cooling loop 2 after the combustion engine 3 has been turned off,
- maintain a flow of liquid coolant in the cooling loop 2 in a situation in which the first liquid coolant pump 10, which is driven by the combustion engine 3, has ceased to function due to a functional error, or
- be driven together with the first liquid coolant pump 10 in order to generate a robust flow of liquid coolant in the cooling loop 2 in a situation involving an extremely high engine load and extra high cooling demand for the combustion engine 3, whereupon the valve flap 21 assumes a position between the aforesaid end positions.

The cooling system according to the invention is intended, in particular, to be used in a heavy motor vehicle such as a bus, a tractor or a goods vehicle.

The invention is naturally not limited in any way to the embodiments described above, but rather a number of potential modifications thereof should be obvious to one skilled in the art, without deviating as a result from the basic idea of the invention as defined in the accompanying claims.

## Claims

1. A cooling system for a motor vehicle comprising:
- a cooling loop (2) for cooling a combustion engine (3) of the motor vehicle by means of a liquid coolant flowing in the cooling loop,
- a liquid coolant radiator (5) coupled into the cooling loop (2) for cooling the liquid coolant,
- a first liquid coolant pump (10) for circulating the liquid coolant in the cooling loop (2), wherein said first liquid coolant pump (10) is arranged in a first line (9) of the cooling loop (2) and arranged so as to be driven by the combustion engine (3),
- a connecting device (18), by means of which the first liquid coolant pump (10) is disconnectable from the combustion engine (3), and
- a second liquid coolant pump (12) for circulating the liquid coolant in the cooling loop (2), wherein said second liquid coolant pump (12) is powered electrically and arranged in a second line (13) of the cooling loop (2), wherein said second line (13) exhibits an inlet (13a) that is connected to the first line (9) at a first point (P1) of the first line and an outlet (13b) that is connected to the first line (9) at a second point (P2) of the first line downstream of said first point (P1),
**characterized in that:**
- a non-return valve (20) is arranged at said second point (P2), wherein said non-return valve (20) comprises a pivotably mounted valve flap (21) that is pivotable between a first end position, in which the valve flap (21) is pivoted away from the first line (9) and covers the outlet (13b) of the second line (13) so as to thereby prevent backflow of liquid coolant in the second line (13), and a second end position, in which the valve flap (21) is pivoted away from the outlet (13b) of the second line (13) and extends across the first line (9) so as to thereby prevent a backflow of liquid coolant in a section (14) of the first line (9) extending between said first point (P1) and said second point (P2),
- the valve flap (21) is arranged so as to assume said first end position when liquid coolant is, under the action of the first liquid coolant pump (10), flowing through said section (14) of the first line (9) at the same time as the second liquid coolant pump (12) is turned off, and so as to assume said second end position when liquid coolant is, under the action of the second liquid coolant pump (12), flowing through the second line (13) at the same time as the first liquid coolant pump (10) is turned off, and
- **in that** the valve flap (21) is, under the action of the force of gravity and/or the spring force of a spring element (25) acting on the valve flap (21):
• arranged so as to assume said second end position when both the liquid coolant pumps (10, 12) are turned off and no liquid coolant is flowing through the first and second lines (9, 13), wherein the valve flap (21) is pivotable from said second end position in the direction toward said first end position under the action of a liquid coolant flow generated by the first liquid coolant pump (10) through said section (14) of the first line (9), or
• arranged so as to assume said first end position when both the liquid coolant pumps (10, 12) are turned off and no liquid coolant is flowing through first and second lines (9, 13), wherein the valve flap (21) is pivotable from said first end position in the direction toward said second end position under the action of a liquid coolant flow generated by the second liquid coolant pump (12) through the second line (13).

2. A cooling system according to claim 1, **characterized in that** the first liquid coolant pump (10) is arranged in said section (14) of the first line (9).

3. A cooling system according to claim 1, **characterized in that** the first liquid coolant pump (10) is arranged in the first line (9) downstream of said second point (P2).

4. A cooling system according to claim 1, **characterized in that** the first liquid coolant pump (10) is arranged in the first line (9) upstream of said first point (P1).

5. A cooling system according to any of claims 1-4, **characterized in that** said first line (9) is arranged so as to connect a liquid coolant outlet (7b) of the liquid coolant radiator (5) to a liquid coolant inlet (8a) of the combustion engine (3).

6. A motor vehicle comprising a combustion engine (3), **characterized in that** the motor vehicle (4) comprises a cooling system (1) according to any of claims 1-5 for cooling the combustion engine (3) and an electronic control device (30) for controlling the connecting device (18) and the second liquid coolant pump (12) of the cooling system (1).

## Patentansprüche

1. Kühlsystem für ein Kraftfahrzeug, aufweisend:
- einen Kühlkreislauf (2) zum Kühlen eines Verbrennungsmotors (3) des Kraftfahrzeugs mittels eines durch den Kühlkreislauf fließenden flüssigen Kühlmittels,
- einen Flüssigkühlmittel-Kühler (5), der zum Kühlen des flüssigen Kühlmittels im Kühlkreislauf (2) eingekoppelt ist,
- eine erste Flüssigkühlmttelpumpe (10) zum Umwälzen des flüssigen Kühlmittels im Kühlkreislauf (2), wobei die erste Flüssigkühlmttelpumpe (10) in einer ersten Leitung (9) des Kühlkreislaufs (2) so angeordnet ist, dass sie vom Verbrennungsmotor (3) angetrieben wird,
- eine Verbindungseinrichtung (18), mittels derer die erste Flüssigkühlmttelpumpe (10) vom Verbrennungsmotor (3) getrennt werden kann, und
- eine zweite Flüssigkühlmttelpumpe (12) zum Umwälzen des flüssigen Kühlmittels im Kühlkreislauf (2), wobei die zweite Flüssigkühlmttelpumpe (12) elektrisch betrieben wird und in einer zweiten Leitung (13) des Kühlkreislaufs (2) angeordnet ist, wobei die zweite Leitung (13) einen Einlass (13a) hat, der an einem Punkt (P1) der ersten Leitung mit der ersten Leitung (9) verbunden ist, und einen Auslass (13b), der an einem zweiten Punkt (P2) der ersten Leitung stromabwärts des ersten Punktes (P1) mit der ersten Leitung (9) verbunden ist,
**dadurch gekennzeichnet, dass**
- ein Rückschlagventil (20) am zweiten Punkt (P2) angeordnet ist, wobei das Rückschlagventil (20) eine schwenkbar montierte Ventilklappe (21) hat, die zwischen einer ersten Endposition, in der die Ventilklappe (21) von der ersten Leitung (9) weggeschwenkt wird und den Auslass (13b) der zweiten Leitung (13) abdeckt, um so einen Rückfluss des flüssigen Kühlmittels in die zweite Leitung (13) zu verhindern (14), und einer zweiten Endposition geschwenkt werden kann, in der die Ventilklappe (21) vom Auslass (13b) der zweiten Leitung (13) weggeschwenkt ist und in die erste Leitung (9) hineinragt, um dadurch einen Rückfluss des flüssigen Kühlmittels in einem Abschnitt (14) der ersten Leitung (9), der sich zwischen dem ersten Punkt (P1) und dem zweiten Punkt (P2) erstreckt, zu verhindern,
- die Ventilklappe (21) so angeordnet ist, dass sie die erste Endposition einnimmt, wenn das flüssige Kühlmittel durch die Einwirkung der ersten Flüssigkühlmttelpumpe (10) zur gleichen Zeit durch den Abschnitt (14) der ersten Leitung (9) strömt, zu der die zweite Flüssigkühlmttelpumpe (12) abgeschaltet ist, und so, dass sie die zweite Endposition einnimmt, wenn das flüssige Kühlmittel durch die Einwirkung der zweiten Flüssigkühlmttelpumpe (12) zur gleichen Zeit durch die zweite Leitung (13) strömt, zu der die erste Flüssigkühlmttelpumpe (10) abgeschaltet ist, und
- dass die Ventilklappe (21) unter der Wirkung der Schwerkraft und/oder der Federkraft eines auf die Ventilklappe (21) wirkenden Federelements (25):
so angeordnet ist, dass sie die zweite Endposition einnimmt, wenn beide Flüssigkühlmttelpumpen (10, 12) abgeschaltet sind und kein flüssiges Kühlmittel durch die erste und die zweite Leitung (9, 13) strömt, wobei die Ventilklappe (21) unter der Wirkung einer von der ersten Flüssigkühlmttelpumpe (10) erzeugten Flüssigkühlmittelströmung durch den Abschnitt (14) der ersten Leitung (9) von der zweiten Endposition zur ersten Endposition geschwenkt werden kann, oder
so angeordnet ist, dass sie die erste Endposition einnimmt, wenn beide Flüssigkühlmttelpumpen (10, 12) abgeschaltet sind und kein flüssiges Kühlmittel durch die erste und die zweite Leitung (9, 13) strömt, wobei die Ventilklappe (21) unter der Wirkung einer von der zweiten Flüssigkühlmttelpumpe (12) erzeugten Flüssigkühlmittelströmung durch die zweite Leitung (13) von der ersten Endposition zur zweiten Endposition geschwenkt werden kann.

2. Kühlsystem nach Anspruch 1, **dadurch gekennzeichnet, dass** die erste Flüssigkühlmttelpumpe (10) im Abschnitt (14) der ersten Leitung (9) angeordnet ist.

3. Kühlsystem nach Anspruch 1, **dadurch gekennzeichnet, dass** die erste Flüssigkühlmttelpumpe (10) in der ersten Leitung (9) stromabwärts des zweiten Punktes (P2) angeordnet ist.

4. Kühlsystem nach Anspruch 1, **dadurch gekennzeichnet, dass** die erste Flüssigkühlmttelpumpe (10) in der ersten Leitung (9) stromaufwärts des ersten Punktes (P1) angeordnet ist.

5. Kühlsystem nach einem der Ansprüche 1 bis 4, **dadurch gekennzeichnet, dass** die erste Leitung (9) so angeordnet ist, dass sie einen Auslass (7c) für das flüssige Kühlmittel des Flüssigkühlmittel-Kühlers (5) des Verbrennungsmotors (3) mit einem Einlass (8a) für das flüssige Kühlmittel des Verbrennungsmotors (3) verbindet.

6. Kraftfahrzeug mit einem Verbrennungsmotor, **dadurch gekennzeichnet, dass** das Kraftfahrzeug (4) ein Kühlsystem (1) nach einem der Ansprüche 1 bis 5 zum Kühlen des Verbrennungsmotors (3) und eine elektronische Steuereinrichtung (30) zum Steuern der Verbindungseinrichtung (18) und der zweiten Flüssigkühlmttelpumpe (12) des Kühlsystems aufweist.

## Revendications

1. Système de refroidissement pour un véhicule automobile comprenant :
- une boucle de refroidissement (2) destinée à refroidir un moteur à combustion interne (3) du véhicule automobile au moyen d'un réfrigérant liquide circulant dans la boucle de refroidissement,
- un radiateur de réfrigérant liquide (5) couplé à la boucle de refroidissement (2) pour refroidir le réfrigérant liquide,
- une première pompe de réfrigérant liquide (10) destinée à faire circuler le réfrigérant liquide dans la boucle de refroidissement (2), ladite première pompe de réfrigérant liquide (10) étant disposée dans une première conduite (9) de la boucle de refroidissement (2) et agencée de manière à être entraînée par le moteur à combustion (3),
- un dispositif de raccordement (18) au moyen duquel la première pompe de réfrigérant liquide (10) peut être déconnectée du moteur à combustion (3), et
- une seconde pompe de réfrigérant liquide (12) destinée à faire circuler le réfrigérant liquide dans la boucle de refroidissement (2), ladite seconde pompe de réfrigérant liquide (12) étant alimentée électriquement et agencée dans une seconde conduite (13) de la boucle de refroidissement (2), dans lequel ladite seconde conduite (13) présente une entrée (13a) qui est raccordée à la première conduite (9) en un premier point (P1) de la première conduite et une sortie (13b) qui est raccordée à la première conduite (9) en un second point (P2) de la première conduite en aval dudit premier point (P1),
**caractérisé en ce que** :
- un clapet anti-retour (20) est agencé au niveau dudit second point (P2), où ledit clapet anti-retour (20) comprend un clapet de soupape monté de manière pivotante (21) pouvant pivoter entre une première position d'extrémité, où le clapet de soupape (21) est pivoté à distance de la première conduite (9) et recouvre la sortie (13b) de la seconde conduite (13) de manière à empêcher ainsi le refoulement du réfrigérant liquide dans la seconde conduite (13) et une seconde position d'extrémité, dans lequel le clapet de soupape (21) est pivoté à distance de la sortie (13b) de la seconde conduite (13) et s'étend à travers la première conduite (9) de manière à empêcher ainsi le reflux du réfrigérant liquide dans une section (14) de la première conduite (9) s'étendant entre ledit premier point (P1) et ledit second point (P2),
- le clapet de soupape (21) est agencé de manière à prendre ladite première position finale lorsque du réfrigérant liquide, sous l'action de la première pompe de réfrigérant liquide (10), s'écoule à travers ladite section (14) de la première conduite (9) en même temps que l'arrêt de la seconde pompe de réfrigérant liquide (12), et de manière à prendre ladite seconde position d'extrémité lorsque le réfrigérant liquide, sous l'action de la seconde pompe de réfrigérant liquide (12), circule dans la seconde conduite (13) en même temps que la première pompe de réfrigérant liquide (10) est arrêtée, et
- **en ce que** le clapet de soupape (21) est, sous l'action de la force de gravité et/ou de la force du ressort d'un élément à ressort (25) agissant sur le clapet de la soupape (21) :
• agencé de manière à prendre ladite seconde position finale lorsque les deux pompes de réfrigérant liquide (10, 12) sont éteintes et qu'aucun réfrigérant liquide ne circule dans les première et seconde conduites (9, 13), où le volet de soupape (21) peut pivoter de ladite seconde position d'extrémité dans la direction de ladite première position d'extrémité sous l'action d'un écoulement de réfrigérant liquide généré par la première pompe de réfrigérant liquide (10) à travers ladite section (14) de la première conduite (9), ou
• agencé de manière à prendre ladite première position d'extrémité lorsque les deux pompes de réfrigérant liquide (10, 12) sont éteintes et qu'aucun réfrigérant liquide ne circule dans les première et seconde conduites (9, 13), où le volet de soupape (21) peut pivoter de ladite première position d'extrémité dans la direction de ladite seconde position d'extrémité sous l'action d'un écoulement de réfrigérant liquide généré par la seconde pompe de réfrigérant liquide (12) à travers la seconde conduite (13).

2. Système de refroidissement selon la revendication 1, **caractérisé en ce que** la première pompe de réfrigérant liquide (10) est disposée dans ladite section (14) de la première conduite (9).

3. Système de refroidissement selon la revendication 1, **caractérisé en ce que** la première pompe de réfrigérant liquide (10) est agencée dans la première conduite (9) en aval dudit second point (P2).

4. Système de refroidissement selon la revendication 1, **caractérisé en ce que** la première pompe de réfrigérant liquide (10) est disposée dans la première conduite (9) en amont dudit premier point (P1).

5. Système de refroidissement selon l'une quelconque des revendications 1 à 4, **caractérisé en ce que** ladite première conduite (9) est agencée de manière à raccorder une sortie de réfrigérant liquide (7b) du radiateur de réfrigérant liquide (5) à une entrée de réfrigérant liquide (8a) du moteur à combustion (3).

6. Véhicule automobile comprenant un moteur à combustion (3), **caractérisé en ce que** le véhicule automobile (4) comprend un système de refroidissement (1) selon l'une quelconque des revendications 1 à 5 pour refroidir le moteur à combustion (3) et un dispositif de commande électronique (30) pour commander le dispositif de raccordement (18) et la seconde pompe de réfrigérant liquide (12) du système de refroidissement (1).
